# EUROPÄISCHE PATENTANMELDUNG

(11) **EP 4 696 430 A1**
(43) Veröffentlichungstag der Anmeldung: **18.02.2026**
(21) Anmeldenummer: 25191278.8
(22) Anmeldetag: 23.07.2025
(51) Int. Cl.: B21D 43/00, B21D 43/10, B21D 43/18, B25J 15/00, B25J 15/06

(54) **TRANSPORTEINRICHTUNG ZUM TRANSPORTIEREN EINES WERKSTÜCKS UND VERFAHREN ZUM DREHEN EINER PLATINE**

(30) Priorität: 13.08.2024 DE 102024123108
(71) Anmelder: ANDRITZ Schuler Pressen GmbH, 73033 Göppingen (DE)
(72) Erfinder: Schmeink, Martin, 73084 Salach (DE)
(74) Vertreter: RavensPAT Patentanwälte Partnerschaft mbB

(57) **Zusammenfassung**

Die Erfindung betrifft eine Transporteinrichtung (101) zum Transportieren einer Platine (P) in einer Fertigungsstraße (1), wobei die Transporteinrichtung (101) einen Träger (102), einen Mehrgelenkmechanismus (103), einen Ausleger (105), einen Auslegerantrieb (106), einen Wagen (109), einen Wagenantrieb (110), eine linke Greifeinrichtung (107) und eine rechte Greifeinrichtung (108) umfasst, wobei der Mehrgelenkmechanismus (103) zwischen dem Träger (102) und dem Ausleger (105) angeordnet ist, wobei der Ausleger (105) mittels des Auslegerantriebs (106) gegenüber dem Mehrgelenkmechanismus (103) verfahrbar ist, wobei die linke Greifeinrichtung (107) und die rechte Greifeinrichtung (108) gemeinsam mit dem Wagen (109) an dem Ausleger (105) verfahrbar sind, wobei die linke Greifeinrichtung (107) und/oder die rechte Greifeinrichtung (108) entlang dem Ausleger (105) relativ zu dem Wagen (109) verfahrbar ist bzw. sind.

## Beschreibung

Die Erfindung betrifft Transporteinrichtung zum Transportieren eines Werkstücks gemäß dem Oberbegriff des Anspruchs 1 sowie ein Verfahren zum Drehen einer Platine mittels einer Transporteinrichtung gemäß dem Anspruch 8.

Aus der DE 195 21 976 A1 ist ein Transportsystem zum Transportieren von Werkstücken durch Bearbeitungsstufen einer Presse, Pressenstraße oder dergleichen bekannt, bei welchem ein mehrachsiger Teiletransport in Pressenlängsrichtung, in vertikaler Richtung sowie in Querrichtung zur Pressenlängsachse durchführbar ist. Um eine Lageänderung der Werkstücke von einer zur nächsten Bearbeitungsstation durchführen zu können, weist die Transporteinrichtung zusätzliche Verschwenkeinrichtungen in Längs- und/oder in Querrichtung auf.

Der Erfindung liegt die Aufgabe zugrunde, eine Transporteinrichtung bzw. ein Verfahren vorzuschlagen, mittels welcher bzw. mittels welchem Platinen, welche sich über eine gesamte Breite der Transporteinrichtung erstrecken ohne großen technischen Aufwand bzw. in kurzer Zeit um eine Hochachse gedreht werden können.

Diese Aufgabe wird ausgehend von den Merkmalen des Oberbegriffs des Anspruchs 1 bzw. 8 durch die kennzeichnenden Merkmale des Anspruchs 1 bzw. 8 gelöst. In den jeweiligen Unteransprüchen sind vorteilhafte und zweckmäßige Weiterbildungen angegeben.

Die erfindungsgemäße Transporteinrichtung ist zum Transportieren einer Platine in einer Fertigungsstraße z.B. in eine Station hinein oder aus einer Station heraus oder zwischen Stationen oder innerhalb einer Station in eine Transportrichtung vorgesehen, wobei wenigstens eine Stationen der Fertigungsstraße insbesondere als Bearbeitungsstation und vorzugsweise als Umformmaschine ausgebildet ist, wobei die Transporteinrichtung einen Träger, einen Mehrgelenkmechanismus, welcher z.B. als Gelenkarm ausgeführt ist, einen Ausleger, einen Auslegerantrieb, einen Wagen, einen Wagenantrieb, eine linke Greifeinrichtung und eine rechte Greifeinrichtung umfasst, wobei der Mehrgelenkmechanismus zwischen dem Träger und dem Ausleger angeordnet ist, wobei der Ausleger mittels des Auslegerantriebs gegenüber dem Mehrgelenkmechanismus verfahrbar ist, wobei die linke Greifeinrichtung und die rechte Greifeinrichtung gemeinsam mit dem Wagen an dem Ausleger verfahrbar sind, wobei die linke Greifeinrichtung und/oder die rechte Greifeinrichtung entlang dem Ausleger relativ zu dem Wagen verfahrbar ist bzw. sind. Hierbei kann das Verfahren derart erfolgen, dass die Greifeinrichtungen nach einem Verfahren relativ zueinander verschoben sein können. Durch das Vorsehen einer derartigen zusätzlichen Verfahrbarkeit für eine der Greifeinrichtungen oder beide Greifeinrichtung lässt sich mit geringem technischen Aufwand eine Zusatzfunktion realisieren, welche es ermöglich, dass Platinen, welche von beiden Greifeinrichtungen gegriffen sind, um eine Hochachse verdreht werden können.

Es kann auch vorgesehen sein, die linke Greifeinrichtung mit einer linken Traverse und einem linken Greifwerkzeug auszustatten und insbesondere mit einem linken Drehantrieb und/oder einem linken Schwenkantrieb und/oder einem linken Querfahrantrieb auszustatten sowie die rechte Greifeinrichtung mit einer rechten Traverse und einem rechten Greifwerkzeug auszustatten und insbesondere mit einem rechten Drehantrieb und/oder einem rechten Schwenkantrieb und/oder einem rechten Querfahrantrieb auszustatten. Hierdurch kann in weiterem Umfang auf eine Ausrichtung der Platine eingewirkt werden.

Um ein synchrones, gegenläufiges Verfahren durch eine gemeinsame Antriebseinrichtung zu realisieren, kann es vorgesehen sein, die linke Greifeinrichtung mit einer linken Längsfahrmechanik auszustatten und die rechte Greifeinrichtung einer rechten Längsfahrmechanik auszustatten, wobei die Transporteinrichtung eine gemeinsame Antriebseinrichtung umfasst, durch welche die linke Greifeinrichtung und die rechte Greifeinrichtung gegenläufig zueinander an dem Wagen verfahrbar sind. Hierdurch ist eine Antriebseinrichtung ausreichend um die gewünschte Funktionalität der beiden Greifeinrichtungen, nämlich das Drehen einer Platine um die Hochachse zu realisieren.

Um ein unabhängiges Verfahren durch eine linke und eine rechte Antriebseinrichtung zu realisieren, kann es vorgesehen sein, die linke Greifeinrichtung mit einer linken Längsfahrmechanik auszustatten und die rechte Greifeinrichtung mit einer rechten Längsfahrmechanik auszustatten, wobei die linke Längsfahrmechanik durch eine linke Antriebseinrichtung und die rechte Längsfahrmechanik durch eine rechte Antriebseinrichtung gebildet sind, durch welche die linke Greifeinrichtung und die rechte Greifeinrichtung unabhängig voneinander an dem Wagen verfahrbar sind. Hierdurch kann der Drehbewegung einer Platine um die Hochachse mit denselben Antriebseinrichtungen nötigenfalls auch noch eine Fahrbewegung in eine Transportrichtung oder entgegen der Transportrichtung überlagert werden. Da hierbei auf dieselben Antriebseinrichtungen eingewirkt wird, lässt sich dies steuerungstechnisch einfach realisieren.

Es kann auch vorgesehen sein, nur eine der beiden Greifeinrichtungen mit einer Längsfahrmechanik und einer Antriebseinrichtung auszustatten, durch welche nur eine der beiden Greifeinrichtungen an dem Wagen verfahrbar ist. Hierdurch ergibt sich für die Transporteinrichtung ein geringerer und gewichtssparender Bauaufwand.

Weiterhin kann eine Verfahrbarkeit der linken Greifeinrichtung und/oder eine Verfahrbarkeit der rechten Greifeinrichtung gegenüber dem Wagen um 30 cm vorgesehen sein, wobei diese Verfahrbarkeit in die Transportrichtung oder gegen die Transportrichtung ausgerichtet ist. Hierdurch lassen sich für eine Drehung von Platinen um die Hochachse Drehwinkel realisieren, welche ausreichend sind, um in der Praxis auftretenden Fahlausrichtungen zu korrigieren.

Es kann auch vorgesehen sein, dass die Platine quer zu einer Transportrichtung gemessen eine Breite von wenigstens 2 m und insbesondere wenigstens 3 m aufweist. Derartig breite Platinen lassen sich mit der Transporteinrichtung problemlos handhaben.

Das erfindungsgemäße Verfahren zum Drehen einer Platine mittels einer Transporteinrichtung nach wenigstens einem der Ansprüche 1 bis 7 um eine quer zu der Transportrichtung ausgerichtete Hochachse umfasst die Schritte:
- Greifen (Ansaugen) der Platine mittels der linken Greifeinrichtung und mittels der rechten Greifeinrichtung,
- entweder Verfahren einer der beiden Greifeinrichtungen entlang der Transportrichtung, derart dass die Platine um die Hochachse gedreht wird
- oder Verfahren der beiden Greifeinrichtungen in entgegengesetzte Richtungen, derart dass die Platine um die Hochachse gedreht wird,
- Absetzen der neu orientierten Platine.

Mit einem derartigen Verfahren lässt sich eine von beiden Greifeinrichtungen gegriffene Platine in kurzer Zeit um die Hochachse verdrehen.

Weiterhin kann es vorgesehen sein
- eine kompensierende Bewegung durch einen/den Drehantrieb der linken Greifeinrichtung und/oder durch einen/den Drehantrieb der rechten Greifeinrichtung auszuführen, wobei dies insbesondere derart erfolgt, dass dies aktiv oder passiv ausgeführt wird und/oder
- eine überlagernde Bewegung durch einen/den Querfahrantrieb der linken Greifeinrichtung und/oder durch einen/den Querfahrantrieb der rechten Greifeinrichtung auszuführen.

Hierdurch lassen sich auch größere Drehwinkel realisieren, ohne Verspannungen in der Transporteinrichtung oder die jeweilige Platine zu erzeugen bzw. lässt sich die Platine durch die Überlagerung von Bewegungen in kurzer Zeit entsprechend den Anforderungen ausrichten.

Schließlich kann es vorgesehen sein, sofern nur eine der beiden Greifeinrichtungen relativ zu dem Wagen verfahrbar ist, zur Kompensation bei einer aus der Drehung der Platine um die Hochachse resultierenden Längsverschiebung zusätzlich den Wagen und/oder den Ausleger entgegen der verfahrenden Greifeinrichtung zu verfahren. Durch eine derartige Überlagerung von Bewegungen lässt sich der Zeitaufwand für einen auszuführenden Arbeitsschritt reduzieren.

Weitere Einzelheiten der Erfindung werden in der Zeichnung anhand von schematisch dargestellten Ausführungsbeispielen beschrieben.

Hierbei zeigen:
- Figur 1:: einen Ausschnitt einer Fertigungsstraße mit einer in der Fertigungsstraße arbeitenden ersten Ausführungsvariante einer erfindungsgemäßen Transporteinrichtung;
- Figur 2:: ein Detail der in der Figur 1 dargestellten Transporteinrichtung in vergrößerter Darstellung;
- Figur 3:: eine Draufsicht auf die in den Figuren 1 und 2 dargestellte Transporteinrichtung;
- Figur 4:: ein Detail der in der Figur 3 dargestellten Transporteinrichtung in vergrößerter Darstellung;
- Figur 5:: eine Draufsicht der in den Figuren 1 bis 4 dargestellten Transporteinrichtung, wobei eine linke Greifeinrichtung in eine Transportrichtung gegenüber dem Wagen verfahren ist und wobei ein rechte Greifeinrichtung gegenüber dem Wagen verfahren ist und wobei hierdurch die gegriffene Platine gedreht und aus einer Ist-Position in eine Soll-Position ausgerichtet ist;
- Figur 6:: eine zweite Ausführungsvariante einer erfindungsgemäßen Transporteinrichtung in analoger Darstellung zu den Figuren 3 und 5;
- Figur 7:: ein Detail der in der Figur 6 dargestellten Transporteinrichtung in vergrößerter Darstellung und
- Figur 8:: eine dritte Ausführungsvariante einer erfindungsgemäßen Transporteinrichtung in analoger Darstellung zu den Figuren 3 und 5 bzw. 6.

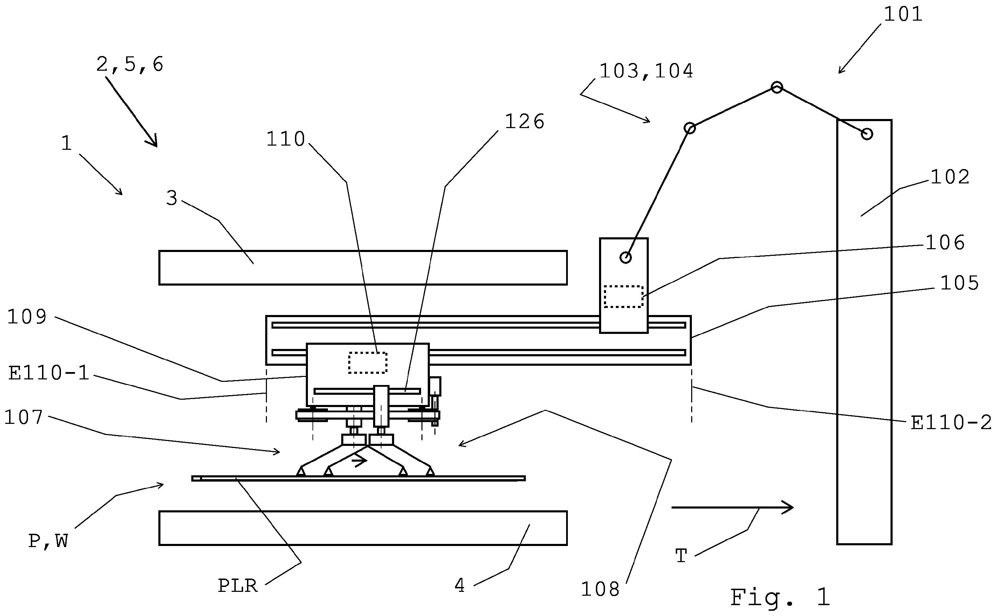

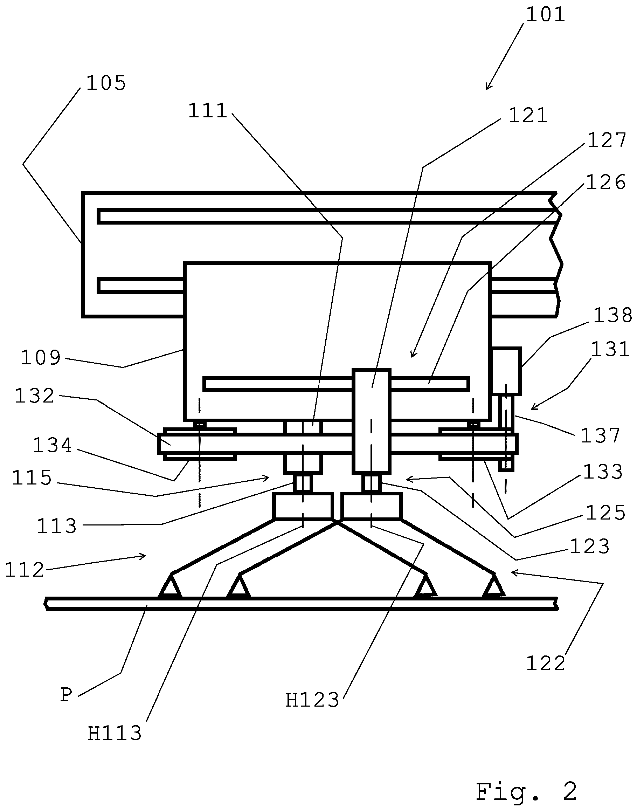

In der Figur 1 ist ein Ausschnitt einer Fertigungsstraße 1 mit einer in der Fertigungsstraße 1 arbeitenden ersten Ausführungsvariante einer erfindungsgemäßen Transporteinrichtung 101 in schematischer Seitenansicht dargestellt. Auch die Figuren 2 bis 5 zeigen diese erste Ausführungsvariante. In der Figur 1 ist von der Fertigungsstraße 1 über die Transporteinrichtung 101 hinaus lediglich eine Station 2 gezeigt, welche durch ein Oberwerkzeug 3 und ein Unterwerkzeug 4 symbolisiert ist.

In eine Transportrichtung T, welche auch als Durchlaufrichtung bezeichnet werden kann, kann auf die Station 2 wenigstens eine weitere Station folgen, in welcher eine in der Figur 1 gezeigte Platine P z.B. weiterbearbeitet werden kann. Der Station 2, welche als Bearbeitungsstation 5 ausgeführt ist, kann auch eine Station vorgeschaltet sein, welche z.B. als Zuführstation ausgebildet sein kann.

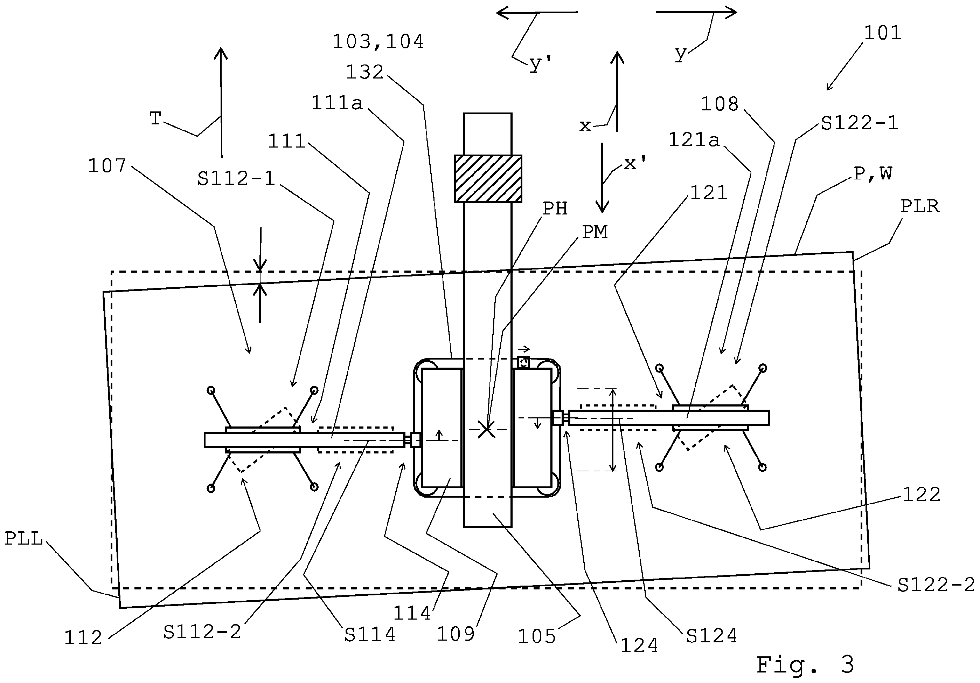

In der Figur 1 ist die Platine P von der Transporteinrichtung 101 gegriffen und soll in das Unterwerkzeug 4 eingelegt werden. Hierbei ist die in der Draufsicht rechteckige Platine P mit ihrer rechten Längsseite PLR und ihrer linken Längsseiten PLL in der Draufsicht betrachtet (siehe Figur 3) leicht schräg zu der Transportrichtung T ausgerichtet. Diese Fehlausrichtung soll vor dem Einlegen der Platine P in das Unterwerkzeug 4 noch korrigiert werden. Eine gewünschte korrekte Ausrichtung der Platine P ist in der Figur 3 mit gestrichelten Linien angedeutet. Um in die korrekte Ausrichtung zu kommen muss die Platine 2 im Uhrzeigersinn um 3° um ihren Mittelpunkt PM um ihre Hochachse PH gedreht werden.

Die Transporteinrichtung 101 ist zur Handhabung eines durch die Platine P gebildeten Werkstücks W innerhalb der Station 2 vorgesehen. Die Station 2 ist als Bearbeitungsstation 5, nämlich in Form einer Umformmaschine 6 ausgebildet.

Die Transporteinrichtung 101 umfasst einen ortsfesten Träger 102, einen Mehrgelenkmechanismus 103, welcher als Gelenkarm 104 ausgebildet ist, einen Ausleger 105 einen an dem Gelenkarm 104 ausgebildeten Auslegerantrieb 106, einen Wagen 109, einen Wagenantrieb 110, eine linke Greifeinrichtung 107 und eine rechte Greifeinrichtung 108.

Der Mehrgelenkmechanismus 103 ist zwischen dem Träger 102 und dem Ausleger 105 angeordnet. Der Ausleger 105 ist mittels des Auslegerantriebs 106 gegenüber dem Gelenkarm 104 verfahrbar.

Die linke Greifeinrichtung 107 und die rechte Greifeinrichtung 108 sind gemeinsam mit dem Wagen 109 an dem Ausleger 105 entlang einer Längserstreckung des Auslegers 105 verfahrbar.

Der Wagen 110 ist gegenüber dem Ausleger 105 entlang dieser Längserstreckung zwischen einer ersten, hinteren Endstellung E110-1 und einer zweiten, vorderen Endstellung E110-2, welche der Wagen 110 gegenüber dem Ausleger 105 einnehmen kann, verfahrbar.

Die linke Greifeinrichtung 107 und die rechte Greifeinrichtung 108 sind entlang der Transportrichtung T und somit ebenfalls in Längserstreckung des Auslegers 105 relativ zu dem Wagen 110 vorwärts in x-Richtung und rückwärts in x'-Richtung verfahrbar, wobei die beiden Greifeinrichtungen 107, 108 - in der Draufsicht und in Transportrichtung betrachtet - nach einem Verfahren entweder relativ zueinander verschoben zueinander ausgerichtet sind oder sich in einer Mittelstellung gegenüberstehen.

Die linke Greifeinrichtung 107 umfasst eine linke Traverse 111, ein linkes Greifwerkzeug 112, einen linken Drehantrieb 113, einen linken Schwenkantrieb 114 und einen linken Querfahrantrieb 115 (siehe insbesondere Figuren 2 und 3).

Durch den linken Drehantrieb 113 ist das Greifwerkzeug 112 um eine Hochachse H113 gegenüber der linken Traverse 111 wahlweise nach links oder nach rechts verdrehbar (siehe insbesondere Figur 2).

Mittels des linken Schwenkantriebs 114 ist ein äußerer Teil 111a der linken Traverse 111 um eine waagrecht im Raum liegende und quer zu der Transportrichtung T ausgerichtet Schwenkachse S114 derart verdrehbar, dass mit diesem das linke Greifwerkzeug 112 geschwenkt wird (siehe insbesondere Figur 3).

Mittels des zwischen der linken Traverse 111 und dem linken Greifwerkzeug 112 angeordneten Querfahrantriebs 115 ist das linke Greifwerkzeug 112 quer zu der Transportrichtung T nach links in y'-Richtung und nach rechts in y-Richtung entlang der Traverse 111 verfahrbar (siehe insbesondere Figuren 2 und 3).

Exemplarisch ist das linke Greifwerkzeug 112 mit gestrichelten Linien zusätzlich sowohl in einer nach links um die Hochachse H113 gedrehten Stellung S112-1 und in einer nach rechts in y-Richtung verfahrenen Stellung S112-2 gezeigt (siehe insbesondere Figur 3).

Die rechte Greifeinrichtung 108 ist analog zu der linken Greifeinrichtung 107 ausgebildet. Die rechte Greifeinrichtung 108 umfasst eine rechte Traverse 121, ein rechtes Greifwerkzeug 122, einen rechten Drehantrieb 123, einen rechten Schwenkantrieb 124 und einen rechten Querfahrantrieb 125 (siehe insbesondere Figuren 2 und 3).

Mittels des rechten Drehantriebs 123 ist das rechte Greifwerkzeug 122 um eine Hochachse H123 gegenüber der linken Traverse 121 wahlweise nach links oder nach rechts verdrehbar (siehe insbesondere Figur 2).

Mittels des rechten Schwenkantriebs 124 ist ein äußerer Teil 121a der rechten Traverse 121 um eine waagrecht im Raum liegende und quer zu der Transportrichtung T ausgerichtet Schwenkachse S124 derart verdrehbar, dass mit diesem das rechte Greifwerkzeug 122 geschwenkt wird (siehe insbesondere Figur 3).

Mittels des zwischen der rechten Traverse 121 und dem rechten Greifwerkzeug 122 angeordneten Querfahrantriebs 125 ist das rechte Greifwerkzeug 122 quer zu der Transportrichtung T nach links in y'-Richtung und nach rechts in y-Richtung entlang der Traverse 121 verfahrbar (siehe insbesondere Figuren 2 und 3).

Exemplarisch ist das rechte Greifwerkzeug 122 mit gestrichelten Linien zusätzlich sowohl in einer nach links um die Hochachse H123 gedrehten Stellung S122-1 und in einer nach links in y'-Richtung verfahrenen Stellung S122-2 gezeigt (siehe insbesondere Figur 3).

Die linke Greifeinrichtung 107 ist mit ihrer Traverse 111 verschieblich an dem Wagen 109 in einer linken Führung 116 geführt, so dass eine Längsfahrmechanik 117 gebildet ist. Hierdurch ist eine Verschieblichkeit entlang der Transportrichtung T nach vorne in x-Richtung und nach hinten in x'-Richtung gegeben (siehe insbesondere Figur 3).

Die rechte Greifeinrichtung 108 ist mit ihrer Traverse 121 ebenfalls verschieblich an dem Wagen 109 in einer rechten Führung 126 geführt, so dass eine Längsfahrmechanik 127 gebildet ist. Hierdurch ist eine Verschieblichkeit ebenso entlang der Transportrichtung T nach vorne in x-Richtung und nach hinten in x'-Richtung gegeben (siehe insbesondere Figuren 1 bis 3).

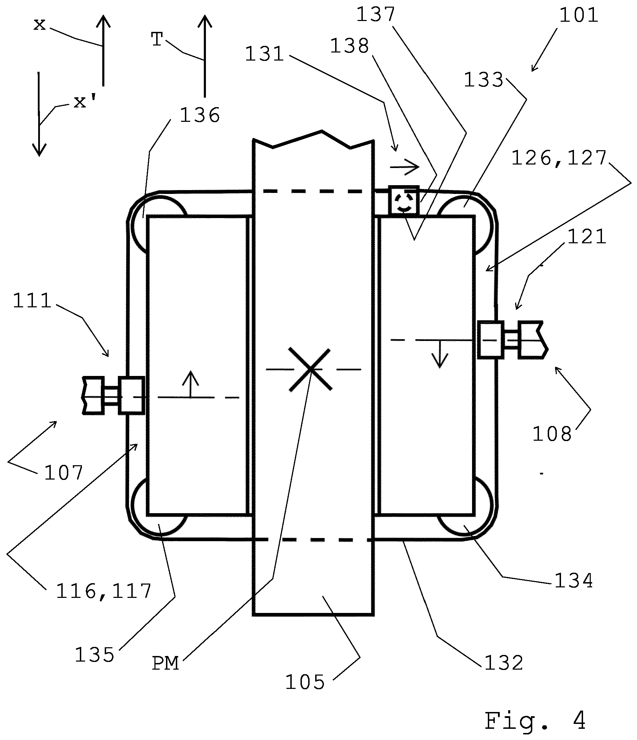

Die Transporteinrichtung 101 umfasst eine gemeinsame Antriebseinrichtung 131 für die linke Greifeinrichtung 107 und die rechte Greifeinrichtung 108 (siehe insbesondere Figuren 2 und 4). Die Antriebseinrichtung 131 umfasst einen Zahnriemen 132, vier Spannrollen 133, 134, 135 und 136, ein Antriebsritzel 137 und einen Elektromotor 138.

Die Spannrollen 133, 134, 135 und 136 sind frei drehbar gegenüber dem Wagen 109 derart unter dem Wagen 109 angeordnet, dass der Zahnriemen 132 um die vier Spannrollen 133, 134, 135 und 136 umlaufen kann. Ein Antrieb des Zahnriemens 132 für einen Rechtslauf oder einen Linkslauf erfolgt mittels des Antriebsritzels 137, über welches der Zahnriemen 132 geführt ist. Das Antriebsritzel 137 wird von dem Elektromotor 138 angetrieben, wobei der Elektromotor 138 an dem Wagen 109 befestigt ist.

Die linke Greifeinrichtung 107 ist mit ihrer linken Traverse 111 mit dem Zahnriemen 132 gekoppelt und die rechte Greifeinrichtung 108 ist mit ihrer rechten Traverse 121 mit dem Zahnriemen 132 gekoppelt. Entsprechend wird bei einem in Draufsicht auf die Transporteinrichtung 101 betrachteten Rechtslauf des Zahnriemens 132 die rechte Greifeinrichtung 108 in x'-Richtung entgegen der Transportrichtung T bewegt und wird gleichzeitig die linke Greifeinrichtung 107 in x-Richtung in die Transportrichtung T bewegt (siehe Figur 4) . Es erfolgt also eine gegenläufige Bewegung der Greifeinrichtungen 107 und 108. Bei einem in Draufsicht auf die Transporteinrichtung 101 betrachteten Linkslauf des Zahnriemens 132 bewegt sich die linke Greifeinrichtung 107 in x'-Richtung und die rechte Greifeinrichtung 108 in x-Richtung.

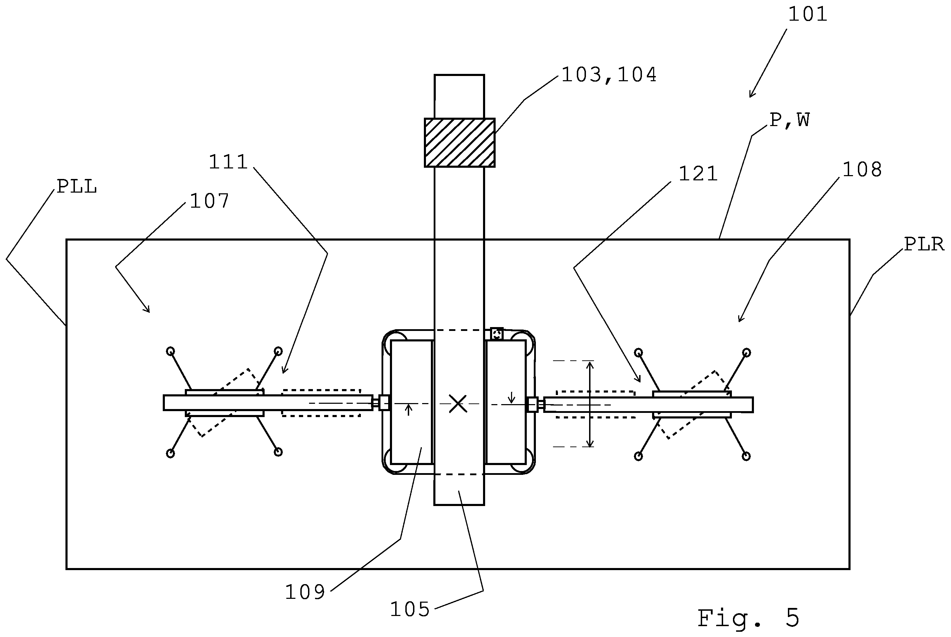

Aus der Figur 3 ist nun ersichtlich, dass die oben erwähnte Fehlausrichtung der Platine P, welche durch das linke Greifwerkzeug 112 und das rechte Greifwerkzeug 122 gegriffen ist, dadurch korrigiert werden kann, dass die Antriebseinrichtung 131 solange im Rechtslauf betrieben wird, bis die linke Traverse 111 und die rechte Traverse 121 direkt gegenüberliegend zu dem Wagen 109 positioniert sind, wie dies in der Figur 5 gezeigt ist. Hierbei sind das linke Greifwerkzeug 112 und das rechte Greifwerkzeug 122 derart zu dem Mittelpunkt PM der Platine P positioniert, dass diese durch die Verfahrbewegung der linken Greifeinrichtung 107 in x-Richtung und die Verfahrbewegung der rechten Greifeinrichtung 108 in x'-Richtung um ihren Mittelpunkt PM gedreht wird.

Grundsätzlich gilt für alle Ausführungsvarianten, dass mit einem "Greifen der Platine" jeweils alle Möglichkeiten gemeint sein könne, welche geeignet sind eine Platine zu halten, unabhängig davon, ob dies z.B. durch Ansaugen, Magnetkraft oder Klemmen erfolgt. Bei den beschriebenen Ausführungsvarianten können vorrangig Sauggreifer zum Einsatz kommen.

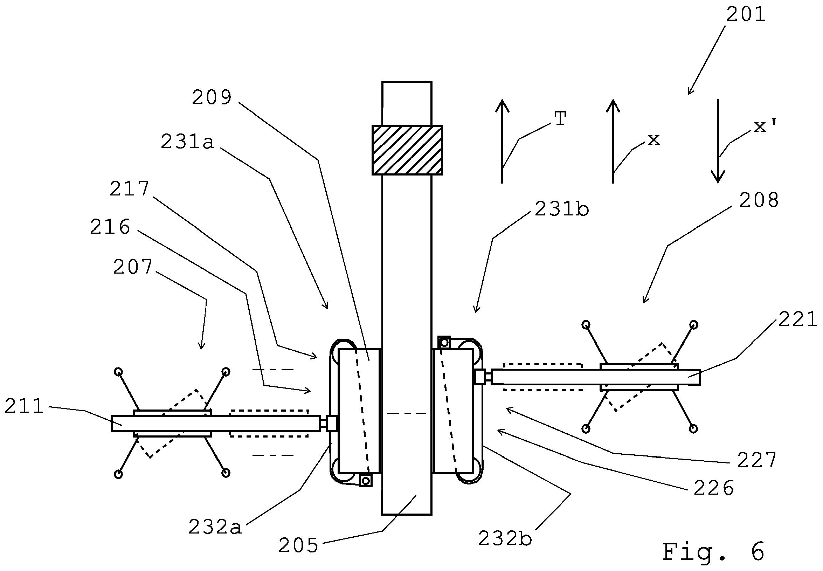

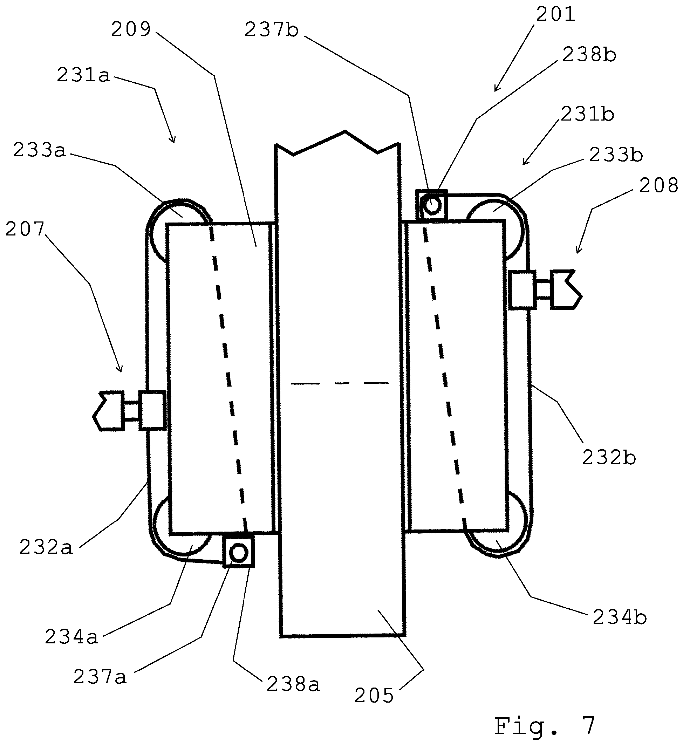

In den Figuren 6 und 7 ist eine zweite Ausführungsvariante einer erfindungsgemäßen Transporteinrichtung 201 gezeigt, wobei die Figuren 6 und 7 analog zu den Darstellungen der Figuren 3 und 5 ausgeführt sind. Grundsätzlich wir auf die vorstehende Beschreibung zu der ersten Ausführungsvariante verwiesen. Korrespondierende Bezugszeichen sind jeweils um 100 erhöht. Die zweite Ausführungsvariante unterscheidet sich von der ersten Ausführungsvariante nur dadurch, dass statt nur einer Antriebseinrichtung zwei Antriebseinrichtungen 231a, 231b zum Einsatz kommen. Die Transporteinrichtung 201 umfasst die erste Antriebseinrichtung 231a für eine linke Greifeinrichtung 207 und die zweite Antriebseinrichtung 231b für eine rechte Greifeinrichtung 208.

Die linke Greifeinrichtung 207 ist mit ihrer Traverse 211 verschieblich an dem Wagen 209 in einer linken Führung 216 geführt, so dass eine Längsfahrmechanik 217 gebildet ist. Hierdurch ist eine Verschieblichkeit entlang einer Transportrichtung T nach vorne in x-Richtung und nach hinten in x'-Richtung gegeben.

Die rechte Greifeinrichtung 208 ist mit ihrer Traverse 221 ebenfalls verschieblich an dem Wagen 209 in einer rechten Führung 226 geführt, so dass eine Längsfahrmechanik 227 gebildet ist. Hierdurch ist eine Verschieblichkeit ebenso entlang der Transportrichtung T nach vorne in x-Richtung und nach hinten in x'-Richtung gegeben.

Die linke Antriebseinrichtung 231a umfasst einen Zahnriemen 232a, zwei Spannrollen 233a und 234a, ein Antriebsritzel 237a und einen Elektromotor 238a.

Die Spannrollen 233a und 234a sind frei drehbar gegenüber einem Wagen 209 derart unter dem Wagen 209 angeordnet, dass der Zahnriemen 232a um die zwei Spannrollen 233a und 234a sowie das Antriebsritzel 237a umläuft, wenn sich das Antriebsritzen 237a in einem Rechtlauf oder in einem Linkslauf dreht. Das Antriebsritzel 237a wird von dem Elektromotor 238a angetrieben, wobei der Elektromotor 238a an dem Wagen 209 befestigt ist. Entsprechend kann die linke Greifeinrichtung 207 unabhängig von der rechten Greifeinrichtung 208 gegenüber dem Wagen 209 bewegt werden.

Die rechte Antriebseinrichtung 231b umfasst einen Zahnriemen 232b, zwei Spannrollen 233b und 234b, ein Antriebsritzel 237a und einen Elektromotor 238b.

Die Spannrollen 233b und 234b sind frei drehbar gegenüber dem Wagen 209 derart unter dem Wagen 209 angeordnet, dass der Zahnriemen 232b um die zwei Spannrollen 233b und 234b sowie das Antriebsritzel 237b umläuft, wenn sich das Antriebsritzen 237b in einem Rechtlauf oder in einem Linkslauf dreht. Das Antriebsritzel 23ba wird von dem Elektromotor 238b angetrieben, wobei der Elektromotor 238b an dem Wagen 209 befestigt ist. Entsprechend kann die rechte Greifeinrichtung 208 unabhängig von der linken Greifeinrichtung 207 gegenüber dem Wagen 209 bewegt werden.

Nachdem die linke Greifeinrichtung 207 und die rechte Greifeinrichtung 208 unabhängig voneinander wahlweise in x-Richtung oder x'-Richtung verfahren werden können, ist es möglich, allein mittels der beiden Antriebseinrichtungen 231a und 231b eine hier nicht dargestellte Platine nicht nur zu drehen, sondern diese durch eine überlagerte Bewegung auch in die Transporteinrichtung oder entgegen der Transportrichtung zu verfahren, so dass z.B. eine weiter erforderliche Ausrichtung der Platine auf ein Unterwerkzeug erfolgten kann.

Der Wagen 209 ist an einem Ausleger 205 verfahrbar, wie dies zu der ersten Ausführungsvariante beschrieben ist.

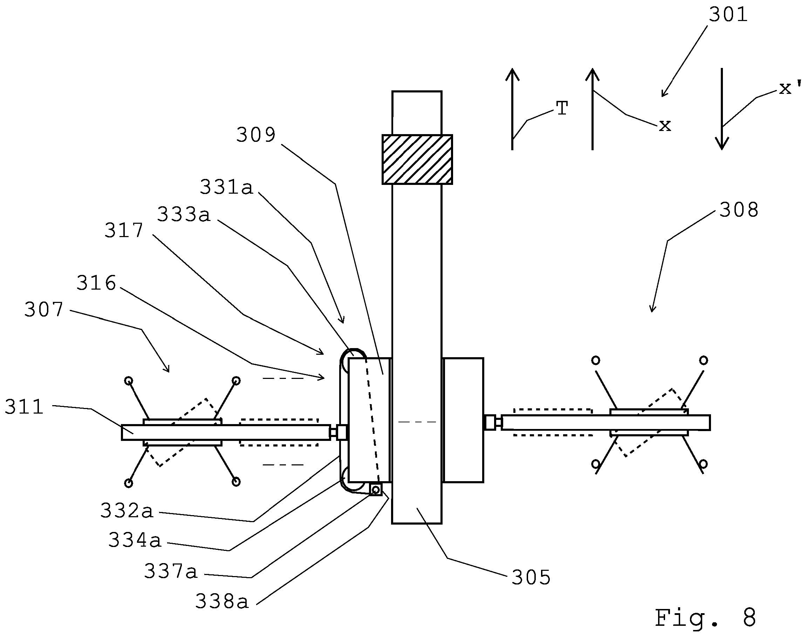

In der Figur 8 ist eine dritte Ausführungsvariante einer erfindungsgemäßen Transporteinrichtung 301 gezeigt, wobei die Figur 8 analog zu der Darstellung der Figur 3 bzw. 6 ausgeführt ist. Grundsätzlich wir auf die vorstehende Beschreibung zu der ersten Ausführungsvariante und der zweiten Ausführungsvariante verwiesen. Korrespondierende Bezugszeichen sind jeweils um 100 bzw. 200 erhöht. Die dritte Ausführungsvariante unterscheidet sich von der ersten Ausführungsvariante nur dadurch, dass nur eine linke Greifeinrichtung 307 durch eine Antriebseinrichtung 331a angetrieben ist und eine rechte Greifeinrichtung 308 fest mit einem Wagen 309 verbunden ist. In Bezug auf die zweite Ausführungsvariante unterscheidet sich die dritte Ausführungsvariante dadurch, dass diese zwar baugleich ausgeführt ist, die Baugleichheit aber nur hinsichtlich einer Anbindung der linken Greifeinrichtung 307 an einen Wagen 309 zutreffend ist und für eine rechte Greifeinrichtung 308 eine starre Anbindung an den Wagen 309 vorgesehen ist.

Die linke Greifeinrichtung 307 ist mit ihrer Traverse 311 verschieblich an dem Wagen 309 in einer linken Führung 316 geführt, so dass eine Längsfahrmechanik 317 gebildet ist. Hierdurch ist eine Verschieblichkeit entlang einer Transportrichtung T nach vorne in x-Richtung und nach hinten in x'-Richtung gegeben.

Die linke Antriebseinrichtung 331a umfasst einen Zahnriemen 332a, zwei Spannrollen 333a und 334a, ein Antriebsritzel 337a und einen Elektromotor 338a.

Die Spannrollen 333a und 334a sind frei drehbar gegenüber dem Wagen 309 derart unter dem Wagen 309 angeordnet, dass der Zahnriemen 332a um die zwei Spannrollen 333a und 334a sowie das Antriebsritzel 337a umläuft, wenn sich das Antriebsritzen 337a in einem Rechtslauf oder in einem Linkslauf dreht. Das Antriebsritzel 337a wird von dem Elektromotor 338a angetrieben, wobei der Elektromotor 338a an dem Wagen 309 befestigt ist. Entsprechend kann die linke Greifeinrichtung 307 unabhängig von der rechten Greifeinrichtung 308 gegenüber dem Wagen 309 bewegt werden.

Um mit der Transporteinrichtung 301 die z.B. in der Figur 3 gezeigte Platine in die gewünschte Orientierung und Position zu bringen, ist eine nur auf einer Seite des Mittelpunkts der Platine erfolgende lineare Verschiebung nicht ausreichend. Dies kann bei Verwendung der Transporteinrichtung 301 aber mittels einer Bewegung des Wagens 309 an einem Ausleger 305 erfolgen, welche einer der Bewegung der linken Greifeinrichtung 307 an dem Wagen 309 überlagerten ist oder zeitlich vor oder zeitlich nach dieser erfolgt.

### Bezugszeichenliste:

- 1: Fertigungsstraße
- 2: Station von 501
- 3: Oberwerkzeug
- 4: Unterwerkzeug
- 5: Bearbeitungsstation
- 6: Umformmaschine

- E110-1: erste, hintere Endstellung des Wagens an 105
- E110-2: zweite. vordere Endstellung des Wagens an 105
- H113: Hochachse (linker Drehantrieb 113)
- H123: Hochachse (rechter Drehantrieb 123)
- P: Platine
- PM: Mittelpunkt der Platine
- PH: Hochachse von P
- PLL: linke Längsseite der Platine
- PLR: rechte Längsseite der Platine
- S114: Schwenkachse (linker Schwenkantrieb 114)
- S124: Schwenkachse (rechter Schwenkantrieb 124)
- T: Transportrichtung
- W: Werkstück
- x: Richtung (nach vorne in Bezug auf die Transportrichtung T)
- x': Richtung (nach hinten in Bezug auf die Transportrichtung T)
- y': Richtung (quer zu der Transportrichtung T nach links)
- y: Richtung (quer zu der Transportrichtung T nach rechts

- 101: Transporteinrichtung (erste Ausführungsvariante)
- 102: Träger
- 103: Mehrgelenkmechanismus
- 104: Gelenkarm
- 105: Ausleger (am Gelenkarm verfahrbar)
- 106: Auslegerantrieb (bewegt den Ausleger)
- 107: linke Greifeinrichtung
- 108: rechte Greifeinrichtung
- 109: Wagen (am Ausleger verfahrbar)
- 110: Wagenantrieb (bewegt den Wagen)

- 111: linke Traverse
- 112: linkes Greifwerkzeug
- 113: linker Drehantrieb
- 114: linker Schwenkantrieb
- 115: linker Querfahrantrieb
- 116: linke Führung an 109
- 117: linke Längsfahrmechanik

- 121: rechte Traverse
- 122: rechtes Greifwerkzeug
- 123: rechter Drehantrieb
- 124: rechter Schwenkantrieb
- 125: rechter Querfahrantrieb
- 126: rechte Führung an 109
- 127: rechte Längsfahrmechanik

- 131: Antriebseinrichtung für 107 und 108
- 132: Zahnriemen
- 133-136: Spannrolle
- 137: Ritzel
- 138: Elektromotor

- 201: Transporteinrichtung (zweite Ausführungsvariante)
- 205: Ausleger
- 207: linke Greifeinrichtung
- 208: rechte Greifeinrichtung
- 209: Wagen
- 216: linke Führung an 209
- 217: linke Längsfahrmechanik
- 226: rechte Führung an 209
- 227: rechte Längsfahrmechanik
- 231a: Antriebseinrichtung für 207
- 231b: Antriebseinrichtung für 208
- 232a: Zahnriemen von 231a
- 232b: Zahnriemen von 231b
- 233a, 234a: Spannrolle von 231a
- 233b, 234b: Spannrolle von 231b
- 237a: Ritzel von 231a
- 237b: Ritzel von 231b
- 238a: Elektromotor von 231a
- 238b: Elektromotor von 231b

- 301: Transporteinrichtung (dritte Ausführungsvariante)
- 305: Ausleger
- 307: linke Greifeinrichtung
- 308: rechte Greifeinrichtung
- 309: Wagen
- 316: linke Führung an 209
- 317: linke Längsfahrmechanik
- 331a: Antriebseinrichtung für 307
- 332a: Zahnriemen von 331a
- 333a, 334a: Spannrolle von 331a
- 337a: Ritzel von 331a
- 338a: Elektromotor von 331a

## Patentansprüche

1. Transporteinrichtung (101; 201; 301) zum Transportieren einer Platine (P) in einer Fertigungsstraße (1), wobei wenigstens eine Station (2) der Fertigungsstraße (1) insbesondere als Bearbeitungsstation (5) und vorzugsweise als Umformmaschine (6) ausgebildet ist,
- wobei die Transporteinrichtung (101; 201; 301) einen Träger (102), einen Mehrgelenkmechanismus (103), einen Ausleger (105), einen Auslegerantrieb (106), einen Wagen (109; 209; 309), einen Wagenantrieb (110), eine linke Greifeinrichtung (107; 207; 307) und eine rechte Greifeinrichtung (108; 208; 308) umfasst,
- wobei der Mehrgelenkmechanismus (103) zwischen dem Träger (102) und dem Ausleger (105; 205; 305) angeordnet ist,
- wobei der Ausleger (105; 205; 305) mittels des Auslegerantriebs (106) gegenüber dem Mehrgelenkmechanismus (103) verfahrbar ist,
- wobei die linke Greifeinrichtung (107; 207; 307) und die rechte Greifeinrichtung (108; 208; 308) gemeinsam mit dem Wagen (109; 209; 309) an dem Ausleger (105; 205; 305) verfahrbar sind,
- wobei die linke Greifeinrichtung (107; 207; 307) und/oder die rechte Greifeinrichtung (108; 208; 308) entlang dem Ausleger (105; 205; 305) relativ zu dem Wagen (109; 209; 309) verfahrbar ist bzw. sind.

2. Transporteinrichtung nach Anspruch 1, **dadurch gekennzeichnet,**
- **dass** die linke Greifeinrichtung (107; 207; 307) eine linke Traverse (111) und ein linkes Greifwerkzeug (112) umfasst und insbesondere einen linken Drehantrieb (113) und/oder einen linken Schwenkantrieb (114) und/oder einen linken Querfahrantrieb (115) umfasst,
- **dass** die rechte Greifeinrichtung (108; 208; 308) einen rechte Traverse (121) und ein rechtes Greifwerkzeug (122) umfasst und insbesondere einen rechten Drehantrieb (123) und/oder einen rechten Schwenkantrieb (124) und/oder einen rechten Querfahrantrieb (125) umfasst.

3. Transporteinrichtung (101) nach wenigstens einem der vorhergehenden Ansprüche 1 bis 2, **dadurch gekennzeichnet, dass** die linke Greifeinrichtung (107) eine linke Längsfahrmechanik (117) umfasst und dass die rechte Greifeinrichtung (108) eine rechte Längsfahrmechanik (127) umfasst, wobei die Transporteinrichtung (101) eine gemeinsame Antriebseinrichtung (131) umfasst, durch welche die linke Greifeinrichtung (107) und die rechte Greifeinrichtung (108) gegenläufig zueinander an dem Wagen (109) verfahrbar sind.

4. Transporteinrichtung (201) nach wenigstens einem der vorhergehenden Ansprüche 1 bis 2, **dadurch gekennzeichnet, dass** die linke Greifeinrichtung (207) eine linke Längsfahrmechanik (217) umfasst und dass die rechte Greifeinrichtung (208) eine rechte Längsfahrmechanik (227) umfasst, wobei die linke Längsfahrmechanik (217) durch eine linke Antriebseinrichtung (231a) und der rechte Längsfahrmechanik (227) durch eine rechte Antriebseinrichtung (231b) gebildet sind, durch welche die linke Greifeinrichtung (207) und die rechte Greifeinrichtung (208) unabhängig voneinander an dem Wagen (209) verfahrbar sind.

5. Transporteinrichtung (301) nach wenigstens einem der vorhergehenden Ansprüche 1 bis 2, **dadurch gekennzeichnet, dass** nur eine der beiden Greifeinrichtungen (307) eine Längsfahrmechanik (317) und eine Antriebseinrichtung (331a) umfasst, so dass nur eine der beiden Greifeinrichtungen (307) an dem Wagen (309) verfahrbar ist.

6. Transporteinrichtung nach wenigstens einem der vorhergehenden Ansprüche, **dadurch gekennzeichnet, dass** die linke Greifeinrichtung (107; 207; 307) und/oder die rechte Greifeinrichtung (108; 208; 308) gegenüber dem Wagen (109; 209; 309) um 30 cm verfahrbar ist.

7. Transporteinrichtung nach wenigstens einem der vorhergehenden Ansprüche, **dadurch gekennzeichnet, dass** die Platine (P) quer zu einer Transportrichtung (T) gemessen eine Breite von wenigstens 2 m und insbesondere wenigstens 3 m aufweist.

8. Verfahren zum Drehen einer Platine (P) mittels einer Transporteinrichtung (101; 201; 301) nach wenigstens einem der Ansprüche 1 bis 7 um eine quer zu der Transportrichtung (T) ausgerichtete Hochachse (PH), umfassend die Schritte:
- Greifen der Platine (P) mittels der linken Greifeinrichtung (107; 207; 307) und mittels der rechten Greifeinrichtung (108; 208; 308),
- entweder Verfahren einer der beiden Greifeinrichtungen (107, 108; 207, 208; 307, 308) entlang der Transportrichtung (T), derart dass die Platine (P) um die Hochachse (PH) gedreht wird
- oder Verfahren der beiden Greifeinrichtungen (107, 108; 207, 208; 307, 308) in entgegengesetzte Richtungen (x, x'), derart dass die Platine (P) um die Hochachse (PH) gedreht wird,
- Absetzen der neu orientierten Platine (P).

9. Verfahren nach Anspruch 8, **dadurch gekennzeichnet, dass** während der Drehung der Platine (P)
- eine kompensierende Bewegung durch einen/den Drehantrieb der linken Greifeinrichtung und/oder durch einen/den Drehantrieb der rechten Greifeinrichtung ausgeführt wird, wobei dies insbesondere derart erfolgt, dass dies aktiv oder passiv ausgeführt wird und/oder
- eine überlagernde Bewegung durch einen/den Querfahrantrieb der linken Greifeinrichtung und/oder durch einen/den Querfahrantrieb der rechten Greifeinrichtung ausgeführt wird.

10. Verfahren nach Anspruch 8 und/oder 9, dass - sofern nur eine der beiden Greifeinrichtungen relativ zu dem Wagen verfahrbar ist - zur Kompensation einer aus der Drehung der Platine um die Hochachse resultierenden Längsverschiebung zusätzlich der Wagen und/oder der Ausleger entgegen der verfahrenden Greifeinrichtung verfahren wird.
